## Europäisches Patentamt
## European Patent Office
## Office européen des brevets

(19)

(11) Veröffentlichungsnummer: **0 045 889**
**B1**

(12) **EUROPÄISCHE PATENTSCHRIFT**

(45) Veröffentlichungstag der Patentschrift:
**27.12.85**

(51) Int. Cl.⁴: **B 62 D  47/02**, B 60 D  5/00

(21) Anmeldenummer: **81105891.6**

(22) Anmeldetag: **25.07.81**

(54) Gelenkfahrzeug, insbesondere Omnibus.

(30) Priorität: **08.08.80 DE 3030015**

(73) Patentinhaber: **M.A.N. MASCHINENFABRIK AUGSBURG-NÜRNBERG Aktiengesellschaft, Dachauer Strasse 667 Postfach 50 06 20, D-8000 München 50 (DE)**

(43) Veröffentlichungstag·der Anmeldung:
**17.02.82 Patentblatt 82/7**

(72) Erfinder: **Hagin, Faust, Dipl.-Ing., Poccistrasse 2, D-8000 München 2 (DE)**

(45) Bekanntmachung des Hinweises auf die Patenterteilung:
**27.12.85 Patentblatt 85/52**

(84) Benannte Vertragsstaaten:
**AT CH DE FR GB IT LI SE**

(56) Entgegenhaltungen:
**DE - A - 3 014 913**
**DE - B - 1 207 220**
**FR - A - 2 424 842**
**FR - A - 2 450 168**
**US - A - 4 106 792**

**AUTOMOTIVE ENGINEERING CONGRESS AND EXPOSITION, Detroit, Michigan, 24.-28. Februar 1975, SAE, USA R.R. BECK et al.: "A cybernetically coupled research vehicle"**

BUNDESDRUCKEREI BERLIN

**Beschreibung**

Die Erfindung betrifft ein Gelenkfahrzeug, insbesondere einen Omnibus, gemäß dem Oberbegriff des Anspruchs 1.

Ein Gelenkfahrzeug dieser Art ist durch die US-A-4 106 792 bekanntgeworden und weist im Bereich der Gelenkverbindung eine aus Auslegern und Hydraulikzylindern gebildete Anordnung auf, welche zur Dämpfung von Schlingerbewegungen des Nachläufers vorgesehen sind. Diese Anordnung nimmt einen sehr großen Bauraum ein, so daß die Durchführung einer Gelenkwelle, die einen im Nachläufer befindlichen Motor mit der Hinterachse des Vorderwagens verbindet, nicht möglich ist. Statt dessen ist bei dem bekannten Gelenkfahrzeug die Achse des Nachläufers selbst angetrieben.

Eine ähnliche Anordnung zeigt auch die FR-A-2 424 842; bei diesem Fahrzeug sind beiderseits der Gelenkverbindung hydraulische Zylinder angeordnet, welche den Vorderwagen mit dem Nachläufer verbinden und das taschenmesserartige Zusammenklappen dieser Wagenteile verhindern sollen, welches wegen des angetriebenen Nachläufers leicht auftreten könnte.

Auch beim Gegenstand dieser Druckschrift stellt sich das Problem der Durchführung einer Gelenkachse im Bereich der Gelenkverbindung nicht, da von dem im Nachläufer befindlichen Motor nicht der Vorderwagen, sondern vielmehr der Nachläufer selbst angetrieben werden soll.

Ausgehend von diesem Stand der Technik liegt der Erfindung die Aufgabe zugrunde, das eingangs genannte, bekannte Gelenkfahrzeug dahingehend weiterzubilden, daß im Gelenkbereich ausreichend Bauraum zur Hindurchführung einer Antriebswelle gelassen ist.

Diese Aufgabe wird erfindungsgemäß durch die Merkmale des Anspruchs 1 gelöst. Hierbei ist die den Nachläufer in Richtung des Vorderwagens verlängerte Lasche nicht, wie es beim obengenannten Stand der Technik übereinstimmend der Fall ist, starr angeordnet, sondern vielmehr schwenkbar angeordnet. Ferner sind die beiden, aus der gattungsbildenden Druckschrift bekannten Ausleger jeweils mit Gelenken miteinander verbunden und dahingehend ausgelegt, daß sie in der Lage sind, die im Bereich des Gelenks auftretenden Schwerkräfte aufzunehmen.

Es wird somit die Möglichkeit geschaffen, die eigentliche Gelenkverbindung, weil sie nur Längskräfte aufzunehmen hat, soweit in ihren baulichen Abmessungen zu reduzieren, daß in ihrem Bereich der angestrebte Raum zur Durchführung einer Kardanwelle geschaffen ist. Die von der eigentlichen Gelenkverbindung nicht mehr übernommenen Querkräfte werden statt dessen von den entsprechend ausgelegten Auslegern übernommen. Auch die Übertragung der Vertikalkräfte zwischen Vorderwagen und Nachläufer erfolgt in den beidseitig angeordneten Auslegern, also in einem Bereich, in dem ausreichend Bauhöhe zur Verfügung steht.

Bevorzugte Ausgestaltungen der Erfindung sind den Ansprüchen 2 und 3 entnehmbar; hierbei gewährleistet die Lagerung der Drehbühne, insbesondere eines Gelenkomnibusses, gemäß Patentanspruch 3 einen über sämtliche Fahrzustände konstanten Spalt zwischen der Drehbühne einerseits und dem Fahrzeugboden des Vorderwagens und des Nachläufers andererseits, da die momentane Knickachse der beiden Fahrzeugteile gegeneinander mit den Schwenkachsen für die Halbscheiben der Drehbühne praktisch zusammenfällt.

Anhand der Zeichnung wird ein Ausführungsbeispiel der Erfindung erläutert. In den Zeichnungen zeigt

Fig. 1 den Gelenkbereich eines Gelenkfahrzeugs in gestreckter Lage in Draufsicht, bei abgenommener Drehbühne,

Fig. 2 einen Längsschnitt durch die Anordnung aus Fig. 1 entsprechend der Schnittlinie II-II,

Fig. 3 einen Längsschnitt durch die Anordnung gemäß Fig. 1 entsprechend der Schnittlinie III-III und

Fig. 4 eine Draufsicht auf das Gelenkfahrzeug gemäß Fig. 1 jedoch in geknickter Fahrstellung.

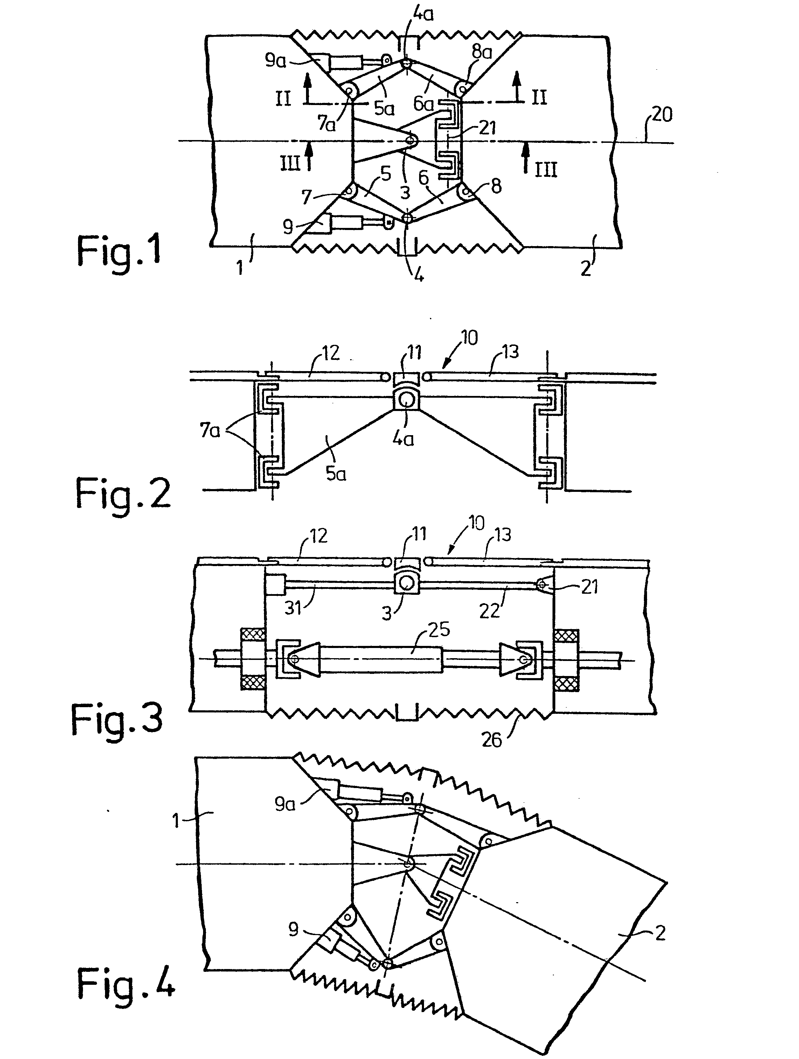

In der in Fig. 1 gezeigten schematischen Darstellung ist ein Vorderwagen eines Gelenkfahrzeuges mit 1, ein Nachläufer mit 2 bezeichnet. Die Fahrzeugmittellängsachse trägt das Bezugszeichen 20. Vorderwagen 1 und Nachläufer 2 sind durch ein in der Fahrzeugmittellängsebene liegendes zentrales Kugelgelenk 3 aneinander gekoppelt, wobei ein Teil des zentralen Kugelgelenks 3 an einem biegesteif mit dem Vorderwagen verbundenen Ausleger 31 befestigt ist, während das andere Teil des Zentralkugelgelenks 3 an einer Lasche 22 befestigt ist, die um eine horizontale Fahrzeugquerachse 21 schwenkbar am Nachläufer 2 gelagert ist. Durch die schwenkbare Anlenkung der Lasche 22 am Nachläufer 2 können über das zentrale Kugelgelenk 3 keine Vertikalkräfte zwischen den Fahrzeugteilen übertragen werden.

Zur weiteren Kopplung von Vorderwagen 1 und Nachläufer 2 sind zu beiden Seiten des zentralen Kugelgelenks 3 am Vorderwagen 1 Ausleger 5 und 5a und am Nachläufer 2 Ausleger 6 und 6a vorgesehen. Die Ausleger 5, 5a sind um vertikale Achsen schwenkbar in Scharnieren 7, 7a am Vorderwagen gelagert, während die Ausleger 6, 6a in Scharnieren 8, 8a um Vertikalachsen schwenkbar am Nachläufer gelagert sind. Jeweils die Ausleger einer Fahrzeugseite, also 5a, 6a und 5, 6 sind über ein Kugelgelenk 4, 4a miteinander verbunden, wobei die Kugelgelenke 4, 4a aus demselben Niveau über der Fahrbahn liegen. Insoweit erfolgt die Übertragung von Vertikalkräften und Horizontalkräften zwischen den beiden Fahrzeugteilen getrennt; alle Vertikalkräfte werden über die Ausleger 5, 5a, 6, 6a übertragen, die Horizontalkräfte werden über die Lasche 22 und das zentrale Kugelgelenk 3 übertragen. Diese getrennte Übertragung von Vertikal-und Horizontalkräften durch verschiedene Komponenten der Gelenkanordnung wird lediglich insoweit durchbrochen als zusätzliche Dämpfungsmittel zur Verhinderung von Schlingerbewegungen des Nachläufers vorgesehen sind. Solche Dämpfungsmittel sind horizontal in Fahrzeuglängsrichtung angeordnete hydraulische oder pneumatische Kolbenzylinderelemente, die auf beiden Fahrzeugseiten beim dargestellten Ausführungsbeispiel zwischen dem Gerippe des Vorderwagens und dem jeweiligen Ausleger 5 oder 6a angelenkt sind. Im Ausführungsbeispiel sind solche Hydraulik- oder Pneumatikzylinder mit 9, 9a bezeichnet. Anstelle ihrer Anordnung zwischen dem Fahrzeuggerippe des Vorderwagens und den Auslegern 5, 5a könnten sie mit gleicher Wirkung auch zwischen dem Fahrzeuggerippe des Nachläufers 2 und den Auslegern 6, 6a angelenkt sein, oder, in ähnlicher Weise, zwischen jeweils zwei Auslegern, also zwischen den Auslegern 5 und 6 und 5a, 6a. Die Hydraulik- oder Pneumatikzylinder 9, 9a können auch als weiche Anschlagdämpfer zur Begrenzung des Knickwinkels zwischen den beiden Fahrzeugteilen verwendet werden, was durch entsprechende Schaltung bzw. Steuerung zu bewirken ist. In Fig. 4 ist z. B. eine Knickstellung des Gelenkfahrzeugs in Draufsicht dargestellt, bei der der maximale Knickwinkel zwischen Vorderwagen 1 und Nachläufer 2 erreicht ist und demzufolge der Hydraulik- oder Pneumatikzylinder 9 seine geringste, der Hydraulik- oder Pneumatikzylinder 9a seine größte Länge aufweist.

In den Fig. 2 und 3 ist die Abdeckung des Gelenkbereichs angedeutet, die mittels einer an sich bekannten, in ihrer Gesamtheit mit 10 bezeichneten Drehbühne erfolgt, die bündig zum Fahrzeugboden des Vorderwagens und des Nachläufers liegt. Die Drehbühne 10 weist eine quer zur Fahrzeuglängsachse liegende Mittelstrebe 11 auf und beidseitig an dieser angelenkte Halbscheiben 12, 13, die mittels Scharnieren an der Mittelstrebe 11 angelenkt sind. Mit ihrem äußeren Rand liegen die Halbscheiben 12, 13 lose in entsprechenden Kehlen des Vorderwagens 1 und des Nachläufers 2, so daß jeweils ein bündiger Übergang zwischen dem Fußboden des Vorderwagens und des Nachläufers und der Drehbühne entsteht. Die Mittelstrebe 11 ist sowohl auf dem zentralen als auch auf den seitlichen Kugelgelenken 3, 4, 4a gelagert, was etwa in der Weise erfolgen kann, daß an der Mittelstrebe 11 jeweils Kugelpfannen vorgesehen sind, die auf entsprechenden Kalotten der vorerwähnten Kugelgelenke aufliegen. Durch diese Lagerung der Mittelstrebe 11 in unmittelbarem Bereich der Kugelgelenke 3, 4, 4a ist sichergestellt, daß bei eingeknicktem Gelenkfahrzeug und gleichzeitig einem von Null verschiedenem Knickwinkel die Halbscheiben 12, 13 nicht über das Fußbodenniveau des Vorderwagens 1 bzw. Nachläufers 2 vorstehen und so Stolperkanten bilden.

Aus Fig. 3 ist erkennbar, daß im Mittelbereich des Fahrzeuggelenks ausreichend Bauraum zur Verfügung steht um eine Gelenkwelle vom Vorderwagen in den Nachläufer bzw. in umgekehrter Richtung zu führen, ohne daß hierdurch die gesamte Bauhöhe der Fahrzeugbodengruppe in diesem Bereich unzulässig groß wird. Die Gelenkwelle ist mit 25 bezeichnet. Einem äußeren Abschluß des Gelenkbereichs dient ein üblicher Faltenbalg 26, wie er bei Gelenkfahrzeugen hinreichend bekannt ist.

## Patentansprüche

1. Gelenkfahrzeug, insbesondere Omnibus, mit Vorderwagen (1) und Nachläufer (2), die über ein in der Fahrzeugmittelebene (20) liegendes zentrales Kugelgelenk (3) gekoppelt sind, wobei

— der Nachläufer (2) über eine Lasche (23) an das Kugelgelenk (3) angeschlossen ist,
— beidseitig des zentralen Kugelgelenks (3) am Vorderwagen (1) und am Nachläufer (2) jeweils ein Ausleger (5, 5a bzw. 6, 6a) angeordnet ist, der jeweils zu dem mit ihm ein Auslegerpaar (5, 6 und 5a, 6a) bildenden Gegenausleger (6, 6a bzw. 5, 5a) einer Fahrzeugseite bei gestrecktem Fahrzeug einen zur Fahrzeugmitte hin offenen Winkel bildet,
— auf jeder Fahrzeugseite jeweils ein Ausleger (5, 5a und 6, 6a) mit einem Dämpfungsglied, wie ein Hydraulik- oder Pneumatikzylinder (9, 9a) gegen das Fahrzeuggerippe abgestützt ist, und
— die Ausleger (5, 6 und 5a und 6a) jeweils um eine Vertikalachse schwenkbar angeordnet sind,

dadurch gekennzeichnet, daß

— die Lasche (22) um eine horizontale Fahrzeugquerachse (21) schwenkbar ist, und
— die beiden Ausleger (5, 6 und 5a und 6a) jeweils eines Auslegerpaares mit einem seitlichen Kugelgelenk (4, 4a) verbunden sind.

2. Gelenkfahrzeug nach Anspruch 1, dadurch gekennzeichnet, daß die Kugelgelenke (3, 4, 4a) alle auf demselben Niveau liegen.

3. Gelenkfahrzeug nach einem der Ansprüche 1 oder 2, mit einer oberhalb des Gelenkbereichs angeordneten Drehbühne (10), dadurch gekennzeichnet, daß die Drehbühne (10) eine quer zur Fahrzeuglängsachse (20) liegende Mittelstrebe (11) und beidseitig an dieser angelegte Halbscheiben (12, 13) aufweist, und daß die Mittelstrebe (11) auf den zentralen und seitlichen Kugelgelenken (3, 4, 4a) gelagert ist.

## Claims

1. An articulated vehicle, more particularly an omnibus, having a front vehicle (1) and a trailer (2) which are interconnected by way of a central swivel joint (3) disposed in the vehicle centre- plane (20), in which

the trailer (2) is connected to the swivel joint (3) by way of a link (22); a swing arm (5, 5a) is disposed on the front vehicle (1) on both sides of the central swivel joint (3) and a swing arm (6, 6a) is disposed on the trailer (2) on both sides of the central swivel joint (3), each such arm forming, with the matching arm (6, 6a; 5, 5a) with which it makes a pair (5, 6 and 5a, 6a) on one side of the vehicle, an angle open towards the centre of the vehicle when the same is in the straight-ahead position; on each side of the vehicle one swing arm (5, 5a; 6, 6a) bears on the vehicle framework by way of a damping member such as a hydraulic or pneumatic cylinder (9, 9a), and each swing arm (5, 6 and 5a, 6a) is adapted for pivoting around a vertical axis,

characterised in that:

the link (22) is pivotable around a horizontal transverse axis (21) of the vehicle, and the two swing arms (5, 6 and 5a, 6a) of any pair are connected to a lateral swivel joint (4, 4a).

2. A vehicle according to claim 1, characterised in that the swivel joints (3, 4, 4a) are all at the same level.

3. A vehicle according to claim 1 and/or 2 having a turntable (10) disposed above the swivel joint area, characterised in that the turntable (10) has a central strut (11) disposed transversely of the vehicle longitudinal axis (20) and, engaging with both sides of the strut, half-discs (12, 13); and the central strut (11) is borne on the central and lateral swivel joints (3, 4, 4a).

## Revendications

1. Véhicule articulé, en particulier autobus avec voiture motrice (1) et voiture tractée (2), couplées par une articulation sphérique (3) centrale située dans le plan moyen (20) du véhicule, dans lequel

— la voiture tractée (2) est raccordée à l'articulation sphérique (3) par une barre de liaison (23),
— un bras (5, 5a; 6, 6a) est disposé sur chacun des deux côtés de l'articulation sphérique centrale (3), au niveau de la voiture motrice (1), et au niveau de la voiture tractée (2), chacun desdits bras formant un angle ouvert vers le centre du véhicule, pour une position étirée dudit véhicule, avec le bras complémentaire (6, 6a; 5, 5a) constituant avec lui la paire de bras (5,6 et 5a, 6a) de l'un des côtés du véhicule,
— un des bras (5, 5a et 6, 6a) est monté en appui contre l'ossature du véhicule, de chaque côté dudit véhicule, par l'intermédiaire d'un élément d'amortissement, comme un vérin hydraulique ou pneumatique (9, 9a) et,
— les bras (5, 6 et 5a et 6a) sont montés articulés chacun autour d'un axe vertical,

caractérisé en ce que

— la barre de liaison (22) est basculable autour d'un axe (21) horizontal, transversal par rapport au véhicule, et
— les deux bras (5, 6 et 5a et 6a) de chacune des paires de bras sont reliés par une articulation sphérique latérale (4, 4a).

2. Véhicule articulé selon la revendication 1, caractérisé en ce que les articulations sphériques (3, 4, 4a) sont toutes situées au même niveau.

3. Véhicule articulé selon l'une des revendications 1 ou 2, avec un plateau rotatif (10) disposé au-dessus de la zone d'articulation, caractérisé en ce que le plateau rotatif (10) comporte une entretoise médiane (11) située transversalement par rapport à l'axe longitudinal (20) du véhicule, ainsi que deux demi-plateaux (12, 13) disposés de part et d'autre (de ladite entretoise), et en ce que l'entretoise médiane (11) est logée sur les articulations (3, 4, 4a) centrale et sphériques.

Fig.1

Fig.2

Fig.3

Fig.4